# EUROPEAN PATENT APPLICATION

(11) **EP 2 233 534 A1**
(43) Date of publication of application: **29.09.2010**
(21) Application number: 10156599.2
(22) Date of filing: 16.03.2010
(51) Int. Cl.: C09D 5/00, C23C 2/00, C23C 28/00, C25D 11/02, F01D 5/00

(54) **Method for producing a protective coating for a component of a turbomachine, the component itself and the respective machine**

(30) Priority: 17.03.2009 IT MI20090405
(71) Applicant: Nuovo Pignone S.p.A., 50127 Florence (IT)
(72) Inventor: Giannozzi, Massimo, 50124, Firenze (IT); Giorni, Eugenio, 50127, Florence (IT); Avanzini, Andrea, 46030, Milan (IT); Paoletti, Riccardo, 50013, Florence (IT); Giovannetti, Lacopo, 50032, Florence (IT)
(74) Representative: Illingworth-Law, William Illingworth

(57) **Abstract**

A method for obtaining a protective coating (10) on a surface to be treated (16) of a light alloy mechanical component (12) of a turbomachine. The method comprises associating a first coating layer (14) resistant to corrosion on the surface to be treated (16) of the mechanical component (12), and associating a second coating layer (18) resistant to erosion, abrasion and high temperatures on the first coating layer (14).

## Description

### BACKGROUND OF THE INVENTION

### Field of the Invention

The present invention refers to a method for producing a protective coating for a component of a turbomachine. Furthermore the invention regards the component on which such coating is applied and the respective turbomachine.

### Description of Related Art

During the development of a new family of three-dimensional centrifugal rotors made of steel for centrifugal compressors there arose the need to use lighter alloys for making the rotors themselves.

One of the main drawbacks regarding the use of lighter alloys for making centrifugal rotors generally lies in their susceptibility to the erosive action that the fluid, in motion at high speed, is capable of exerting, especially if containing liquid or solid particles. The erosive phenomenon, generally of negligible amount in the case of rotors made using traditional material, is high and potentially catastrophic for rotors made of light alloy, due to the limited hardness and resistance to erosion of such materials. This phenomenon is further worsened by the possible presence of condensed or liquid fractions, or of solid particles, transported by the fluid. Use thereof in strongly aggressive environments may also lead to occurrence of corrosive phenomena.

In brief, the term "erosion" refers to a phenomenon whose effect is the gradual removal of material by external fluid agents, gas or liquids, and generally it occurs simultaneously or subsequently to the alteration generated by chemical or physical processes. In addition, the term "abrasion" may be used to indicate a phenomenon whose effect is the gradual removal of material by solid external agents. "Corrosion" instead is a process of degradation and recomposition with other elements to which the metals have been subjected. As a matter of fact, metals are at a higher energy level with respect to that of the corresponding minerals and thus, under given environmental conditions, they are subjected to corrosion. The corrosion process may be classified according to various chemical/physical mechanisms that determine it. For example, there may occur chemical corrosion or in dry environments, purely chemical corrosion, intercrystalline or intergranular corrosion, galvanic or electrochemical corrosion or in moist environments, or other types of corrosion.

Another difficulty lies in the fact that the coatings for the centrifugal rotors must also be "machinable", the term "machinability" indicating the capacity thereof to be obtained using specific apparatus (electrochemical baths or other methods). As a matter of fact, such coatings are very thin, in the order of a few micrometers, and they may be easily damaged.

Another disadvantage lies in that the arrangement of the coating layers must be accurately controlled to maintain the design tolerance on the finished product, simultaneously avoiding unwanted flaws such as marks, delamination of the coating and loss of the barrier values conferred by the coating itself.

Thus currently, regardless of the development of technology, it is difficult and there arises the need, to obtain components for turbomachines which are lighter and resistant, also by virtue of the particular coatings which improve mechanical resistance thereof as well as resistance against erosion and corrosion.

### BRIEF SUMMARY OF THE INVENTION

A first object of the present invention is that of providing a method for coating - using a protective coating - a mechanical component made of a light alloy in a simple and inexpensive manner, simultaneously obtain a component having mechanical and chemical resistance capacities suitable for application in turbomachines.

Another object of the invention is that of providing a light alloy component and a respective turbomachine having improved mechanical and chemical resistance capacities, suitable for application in the turbomachines industry.

These objects according to the present invention are attained by providing a method for producing a protective coating, a component and a turbomachine as outlined in the independent claims.

According to a first aspect, an object of the present invention is represented by the method for obtaining a protective coating on a surface to be treated - of a mechanical component made of a light alloy - of a turbomachine, comprising the following steps:
associating a first coating layer resistant to corrosion to the outer surface to be treated of mechanical component;
associating a second coating layer resistant to erosion, abrasion and high temperatures on said first coating layer.

Within the present invention and the attached claims, the term "protective coating" is used to indicate a coating layer comprised in which, or possibly overlapped, are further intermediate layers. Lastly, the coating may be represented by a plurality of other layers overlapped and possibly at least partly penetrating into each other.

The mechanical component may be a component of a turbomachine which is at least partly impacted by a process fluid, such as for example a rotor of a centrifugal compressor or of an expander.

In an advantageous embodiment of the invention, the first coating layer is obtained by means of anodic oxidation on the surface to be treated, in order to confer particular resistance against corrosion. Anodic oxidation or anodisation is obtained through an irreversible electrochemical process, through which a protective oxide layer of the same material is formed on the surface of the treated component and protects against corrosion. The material undergoes an actual surface transformation: the bare metal reacts with oxygen which is formed on the anode during the electrodeposition process and forms an oxide of the same metal (aluminium or alumina in this case). The thickness of the layer of deposited material may be variable. In particular, for a coating according to the invention, the thickness may vary between about 50 µm up to about 100 µm.

Advantageously, anodic oxidation may be obtained in an electrolytic bath through a galvanic process, i.e. covering the component with the oxide of the same material exploiting the electrolytic deposition.

In a particularly advantageous embodiment of the invention, applied on the oxidised layer is a filler or coating obtained through dichromate aqueous solution, in such a manner to close possible porosities or micro-cracks that may be formed during oxidation.

The second coating layer resistant against erosion and abrasion is advantageously and preferably obtained through paints or resins based on epoxy and silicone, with the addition of possible further additives such as for example colouring agents, pigments, ligands, solvents or other elements, obtained through a process of self-catalysis and subsequent polymerisation (in an oven); generally referred to as epoxy-silicone paints or resins. Such epoxy-silicone paints or resins are also referred to by the name "epoxy-silicone paints".

Generally, the epoxy base is a thermosetting resin obtained through condensation, for example of bisphenol, and it is used for producing paints, adhesives, laminates, glues and also as a matrix for composites with fibreglass and carbon. In the industrial paints sector, epoxy resins are mixed at the right stoichiometric ratio with further components, which react with the resin to confer specific properties depending on the particular application.

The silicone base is a thermosetting resin made up of silicone polymers (or polysiloxanes) based on a silicon-oxygen chain and functional organic groups (R) bound to atoms of silicon. Depending on the length of the siloxane chain, the branching thereof and the functional groups, several resins with various characteristics may be obtained.

In particular, according to the invention, the epoxy base is suitable to confer high resistance against abrasion and erosion, and it is mixed with the abovementioned silicone base (and with possible further additives) to obtain the final paint particularly resistant to high temperatures too, for example up to about 300°C.

According to further aspects, the invention regards a light alloy component comprising the abovementioned protective coating and a turbomachine installed on which is at least one of these components.

An advantage of making centrifugal rotors in using light alloy, in particular aluminium alloy, lies in the possibility of considerably reducing (approximately by 60%) the mass of the component, hence reducing the stresses and vibrations on the shaft. Further possible advantages deriving from the reduction of mass are the increase of the number of stages of the compressor and/or increase of the speed of rotation. Furthermore, the high resistance against corrosion obtained by the use of a protective coating according to the invention allows operating in corrosive environments more aggressive than the current ones.

An advantage of the method according to the invention is given by the fact that it is possible to coat a light alloy component, in particular aluminium alloy, with a protective coating suitable to make it efficiently useable in a turbomachine, even in particularly aggressive corrosive environments, such as for example with a hydrogen sulphide gas, carbon dioxide gas or other gases.

Another advantage lies in the fact that it is possible to easily coat a component having a particularly complex surface to be treated, such as for example that of a rotor of a centrifugal compressor or an expander.

Another advantage lies in that the costs and times of production are extremely low, with the ensuing increase of productivity of the production line.

Another advantage lies in the fact that the machining quality is high, given that the electrochemical deposition is easy to control, has high uniformity and constant thickness.

Another advantage lies in the fact that this method is extremely versatile, given that it can be obtained through automated processes in combination with possible (semi)manual operations, such as painting.

Still, another advantage lies in the fact that the coating thus obtained is particularly resistant both to corrosion and erosion, allowing using aluminium allow components even in applications with acid fluids or corrosives. In addition, the coating according to the invention is suitable to be optimally used also in combination with further different layers, in such a manner to form coatings with more enhanced characteristics.

Furthermore, it is easy to obtain that the finished product maintains its original fluid dynamic characteristics, providing for suitable coefficients of surface expansion during the design step.

Finally, the described invention allows using light alloys for making rotors for centrifugal compressors or expanders with the advantages described above, reducing maintenance needs and thus increasing the useful life for such component and thus for the turbomachine on which such component is installed.

Further characteristics and embodiments of the invention are outlined in the attached dependent claims and shall be further described hereinafter with reference to some non-limiting examples of embodiments.

### BRIEF DESCRIPTION OF THE SEVERAL VIEWS OF THE DRAWINGS

The present invention may be better understood and its numerous objects and advantages shall be clear to those skilled in the art with reference to the attached schematic drawings, which show a practical non-limiting example of the invention itself. In the drawings:
Figure 1 shows, in schematic non-scale section, an embodiment of a protective coating according to the invention;
Figure 2 is a detailed view of a particular of the coating of Figure 1; and
Figure 3 shows a partly sectional view of a mechanical component having a protective coating according to an embodiment of the invention.

### DETAILED DESCRIPTION OF THE INVENTION

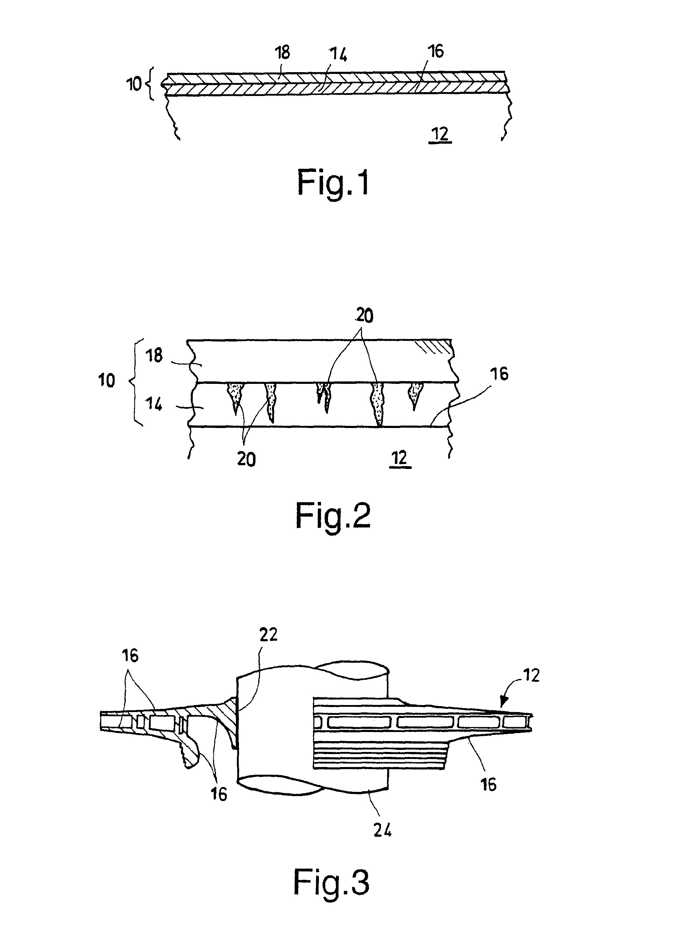

In the drawings, wherein identical numbers correspond to identical parts in all different figures, a protective coating 10 according to the invention (figure 1) for a mechanical component 12 made of light alloy, in particular but not necessarily aluminium alloy, comprises a first coating layer 14 resistant to corrosion, applied on the surface to be treated 16 of the mechanical component 12, and a second coating layer 18 resistant to erosion, abrasion and high temperatures, applied on the first coating layer 14.

In an advantageous embodiment of the invention, the first coating layer 14 is obtained by means of an anodic oxidation in electrolytic bath through a galvanic process.

In this case, the component 12 is dipped into a vat, which forms the so-called galvanic bath, containing an aqueous solution with presence of acids, submerged in which is an electrode for generating an electric current. In such manner, the mechanical component 12 is slowly coated with a thin layer of the same material. It is possible to control the thickness of the oxidised layer, preferably from about 50 µm up to about 100 µm or more, suitably regulating the density of current at which the bath operates and knowing the speed of deposition. It should be observed that figures 1 and 2 are not in scale and thus that the thicknesses of the layers 14 and 18 are represented solely for indicative purposes.

Subsequently, the component 12 is preferably submerged in an aqueous solution containing dichromate salts, thus extracted and dried, in such a manner that the dichromate seals or at least partly closes possible porosities or micro-cracks 20 (figure 2) which may be formed in the layer of anodic oxidation. Such porosities or micro-cracks 20 could otherwise allow corrosive agents of the process fluid to reach and damage the aluminium alloy of the component 12.

This allows forming a first layer 14 (comprising anodisation and sealing using dichromate) particularly resistant to corrosion in a simple and inexpensive manner, and also easily obtainable even on particularly complex surfaces to be treated 16, such as those of a centrifugal rotor 12 (figure 3).

Subsequently, this first layer 14 is covered by applying the second coating layer 18 thereon, obtained by means of a paint or resin of the epoxy-silicone type resistant to erosion, abrasion and high temperatures, as described previously.

Such paint or resin may be without toxic components, such as for example xylene and toluene, and it may be sprayed or painted on the surface to be treated even several times, providing for suitable drying and polymerization steps.

A paint or resin of the abovementioned type may be the one defined as "coating IP9188R1" of "Indestructible Paint Limited" (UK) or the like.

Furthermore, it is also possible to provide for some preliminary steps for preparing the surface of the component 12 for the subsequent operations.

In particular, the following operations may be provided for:
treating the surface in such a manner to improve its surface mechanical characteristics and its mechanical resistance, for example through sand-blasting, to reduce the tension state and improve the resistance of the material to fatigue;
degreasing the mechanical component using solvents or detergents in vapour phase or in submersion for possible chemical degreasing operations;
shielding possible zones of the surface that are not meant to be coated, for example the keying hole of the centrifugal rotor;
performing an acid activation in a bath such as a zinc-coated process with composition suitable to the type of alloy.

It is also possible to provide for some sub-steps after the anodic oxidation and before applying the second layer 18, in such a manner to prepare the surface for the subsequent treatment.

For example, dehydrogenating the previously treated surface may be provided for to remove the hydrogen substrate absorbed during the anodic oxidation and simultaneously improve adhesion thereof. The duration of such treatment depends on the mechanical resistance characteristics of the aluminium alloy. Restoration may also be provided for by applying a chromating for aluminium alloys based on chromium salts in case the coating is damaged, such as for example small scratches or lack of coating.

In a particularly advantageous embodiment of the invention, the light alloy of which the mechanical component 12 is made is any aluminium alloy suitable to be used for obtaining such components.

The following two tables indicate, strictly for exemplifying purposes, the composition of two aluminium alloys (7175-T74 and 7050-T7452 according to the international ASTM B 247 M standards) useable to obtain such component 12:

| **Aluminium alloy 7175-T74** | | |
|---|---|---|
| Composition (ASTM B 247 M) | Min % | Max % |
| *Aluminium (Al)* | *87.82* | *91.42* |
| *Chromium (Cr)* | *0.18* | *0.28* |
| *Copper (Cu)* | *1.20* | *2.00* |
| *Iron (Fe)* | - | *0.20* |
| *Magnesium (Mg)* | *2.10* | *2.90* |
| *Manganese (Mn)* | - | *0.30* |
| *Silicon (Si)* | - | *0.10* |
| *Titanium (Ti)* | - | *0.10* |
| *Zinc (Zn)* | *5.10* | *6.10* |
| *others (for each element)* | - | *0.05* |
| *others (total)* | - | *0.15* |

| **Aluminium alloy 7050-T7452** | | |
|---|---|---|
| Composition (ASTM B 247 M) | Min % | Max % |
| *Aluminium (Al)* | *Bal.* | *Bal.* |
| *Chromium (Cr)* | - | *0.04* |
| *Copper (Cu)* | *2.00* | *2.60* |
| *Iron (Fe)* | - | *0.15* |
| *Magnesium (Mg)* | *1.90* | *2.60* |
| *Manganese (Mn)* | - | *0.10* |
| *Silicon (Si)* | - | *0.12* |
| *Titanium (Ti)* | - | *0.06* |
| *Zinc (Zn)* | *5.70* | *6.70* |
| *others (for each element)* | - | *0.05* |

Figure 3 shows a non-scale partial section of a centrifugal rotor 12 for a centrifugal compressor or a coated expander with the abovementioned coating 10 according to the invention. It should be observed that the surface to be treated 12 comprises both the outer surface and inner surface (i.e. the inner channels) of the rotor 12, except for the keying hole 22 of the shaft 24.

It has thus been observed that the method for producing a protective coating for a component of a turbomachine according to the present invention attains the objects outlined previously.

It is understood that the description outlined above solely represents a possible non-limiting embodiment of the invention, which may also vary in shape and arrangement without departing from the concept on which the invention is based. The presence of reference numbers in the attached claims has the sole purpose of facilitating reading in the light of the description above and of the attached drawings and it does not limit the scope of protection thereof in any manner whatsoever.

## Claims

1. A method for obtaining a protective coating (10) on a surface to be treated (16) of a light alloy mechanical component (12) of a turbomachine, the method comprises:
associating a first coating layer (14) resistant to corrosion on said surface to be treated (16) of the mechanical component (12); and
associating a second coating layer (18) resistant to erosion, abrasion and high temperatures on said first coating layer (14).

2. The method of claim 1, wherein said first coating layer (14) is obtained by means of at least one of the following steps:
providing an anode oxidation on said surface to be treated (16) in such a manner to confer high resistance to corrosion thereon; and
dipping the mechanical component (12) treated with said anode oxidation into a dichromate aqueous solution in such a manner to close any porosities or micro-cracks (20) that might form in said anode oxidation.

3. The method of claim 2, wherein said anode oxidation is performed in an electrolytic bath.

4. The method of claim 2 or claim 3, wherein said anode oxidation is performed through a galvanic process.

5. The method of any one of the preceding claims, wherein said second coating layer (18) is obtained by applying a resin or paint resistant to erosion, abrasion and high temperatures on said first coating layer (14).

6. The method of any one of the preceding claims, wherein said second coating layer (18) is obtained by means of a resin or paint of the epoxy-silicone type, obtained by mixing at least one epoxy base and one silicone base, with possible further additives.

7. The method according to any one of the preceding claims, further comprises at least one of the following steps after said anode oxidation and before applying said second coating layer (18):
dehydrogenating said surfaces (16) previously treated to remove the hydrogen absorbed during said anode oxidation from the substrate and simultaneously improving its adhesion; and
restoring said surface (16) previously treated through the application of a chromatisation for aluminium alloys based on chrome salts.

8. The method according to any one of the preceding claims, further comprises at least one of the following preliminary steps:
treating said surface (16) in such a manner to improve its mechanical surface characteristics and its mechanical resistance;
degreasing said mechanical component (12) with solvents or detergents in vapour phase or by dipping for possible chemical degreasing operations;
shielding possible zones of said surface (16) which should not be coated;
performing an acid activation having a composition suitable for the type of alloy used for manufacturing said mechanical component (12).

9. A mechanical component (12) for a turbomachine, the component is made by an aluminium alloy and comprises a protective coating (10) obtained by the method of any one of the preceding claims.

10. A turbomachine comprising at least one mechanical component (12) of claim 9.
